# EUROPÄISCHE PATENTSCHRIFT

(11) **EP 1 800 038 B1**
(45) Veröffentlichungstag und Bekanntmachung des Hinweises auf die Patenterteilung: **30.04.2008**
(21) Anmeldenummer: 05797191.3
(22) Anmeldetag: 21.09.2005
(51) Int. Cl.: F16K 31/06, B60T 8/36

(54) **ELEKTROMAGNETISCH BETÄTIGBARES VENTIL**
ELECTROMAGNETICALLY ACTUABLE VALVE
SOUPAPE A ACTIONNEMENT ELECTROMAGNETIQUE

(30) Priorität: 07.10.2004 DE 102004048861
(43) Veröffentlichungstag der Anmeldung: 27.06.2007
(73) Patentinhaber: ROBERT BOSCH GMBH, 70442 Stuttgart (DE)
(72) Erfinder: ACAR, Sezgin, 71638 Ludwigsburg (DE); KOLARSKY, Jens, 70839 Gerlingen (DE); LUDEWIG, Erich, 74321 Bietigheim-Bissingen (DE); SOMMER, Dietmar, 74343 Sachsenheim (DE); AMBROSI, Massimiliano, 71672 Marbach (DE); SCHUBITSCHEW, Valentin, 71679 Asperg (DE); BUCHENAU, Ingo, 71711 Steinheim (DE); GONZALEZ ROMERO, Rafael, 74199 Unterheinriet (DE); KRATZER, Dietmar, 71732 Tamm (DE); HILDEN, Michael, 74360 Ilsfeld (DE); BUCHTALA, Boris, 75417 Muehlacker (DE)
(86) Internationale Anmeldenummer: PCT/EP2005/054729
(87) Internationale Veröffentlichungsnummer: WO 2006/040248

(56) Entgegenhaltungen:
- EP-A- 1 118 518
- EP-B- 1 307 369
- US-B1- 6 637 724

## Beschreibung

### Stand der Technik

Die Erfindung betrifft ein elektromagnetisch betätigbares Ventil, insbesondere für Bremskraftanlagen in Kraftfahrzeugen, nach dem Oberbegriff des Anspruchs 1.

Ein derartiges Ventil ist aus der EP 1 307 369 B1 bekannt. Das bekannte Ventil ist in einem Ventilblock als Schaltglied zwischen einem Radbremszylinder und einem Fluidspeicher angeordnet und dient dazu, vom Radbremszylinder unter Druck anstehendes Medium in Richtung des Fluidspeichers abströmen lassen zu können. Aus Gründen der Bauraumoptimierung des Ventilblockes sind die Zulauf- und die Rücklaufbohrung für das Druckmittel im Ventilblock und somit auch im Ventil senkrecht zur Längsachse des Ventils angeordnet. Das hat zur Folge, dass die Zuströmung des Druckmittels vom Radbremszylinder senkrecht zur Längsachse des Stößelelements erfolgt. Bei dem bekannten Ventil wirkt das Druckmittel hydraulisch in derselben Wirkrichtung wie eine Druckfeder, welches das Stößelelement in Richtung eines Dichtsitzes drückt. Es hat sich gezeigt, dass insbesondere der Übergang vom geschlossenen zum geöffneten Ventil bzw. umgekehrt aufgrund der Strömungsverhältnisse mit Geräuschen verbunden ist. Infolge der hydraulisch in derselben Richtung wie die Druckfeder wirkenden Kraft des Druckmittels ist es bei dem bekannten Ventil mit dem vorgegebenen Magnetkreis nicht möglich, den Öffnungs- bzw. Schließvorgang des Ventils in gewünschter Weise zu steuern, um die Geräuschentwicklung zu minimieren.

### Vorteile der Erfindung

Das erfindungsgemäße elektromagnetisch betätigbare Ventil, insbesondere für Bremskraftanlagen in Kraftfahrzeugen, mit den Merkmalen des Anspruchs 1 hat den Vorteil, dass der Öffnungs- bzw. Schließvorgang des Ventils mit von der Magnetseite gesehen relativ geringem Aufwand ansteuerbar ist. Dies wird erfindungsgemäß im Wesentlichen dadurch erreicht, dass das von der Zulaufbohrung zuströmende Druckmittel nunmehr in einer der Druckfeder entgegen gesetzten Richtung auf den Ventilsitz einwirkt, wodurch sich die Bewegung des Stößels beim Öffnungsvorgangs mittels des vorgegebenen Magnetkreises wesentlich besser beeinflussen bzw. steuern lässt. Das vorgeschlagene Ventil ist weiterhin hinsichtlich seiner Anschlüsse kompatibel zu dem bisherigen Ventil, d.h., es können dieselben Ventilblöcke mit derselben Geometrie der Zulauf- bzw. Rücklaufbohrungen für das Druckmittel verwendet werden.

In einer zweckmäßigen Weiterbildung umfasst das Ventilelement eine Prallfläche, so dass der aus dem Dichtbereich austretende Fluidstrahl nicht mehr direkt auf den Anker und das Ventilschließelement wirkt. Dadurch können ungewollte Schwankungen in der Hydraulikkraft reduziert werden, was sich positiv auf die Stabilität und Regelbarkeit des Ventils auswirkt.

Vorteilhafte Weiterbildungen des elektromagnetisch betätigbaren Ventils sind in den Unteransprüchen angegeben.

### Zeichnung

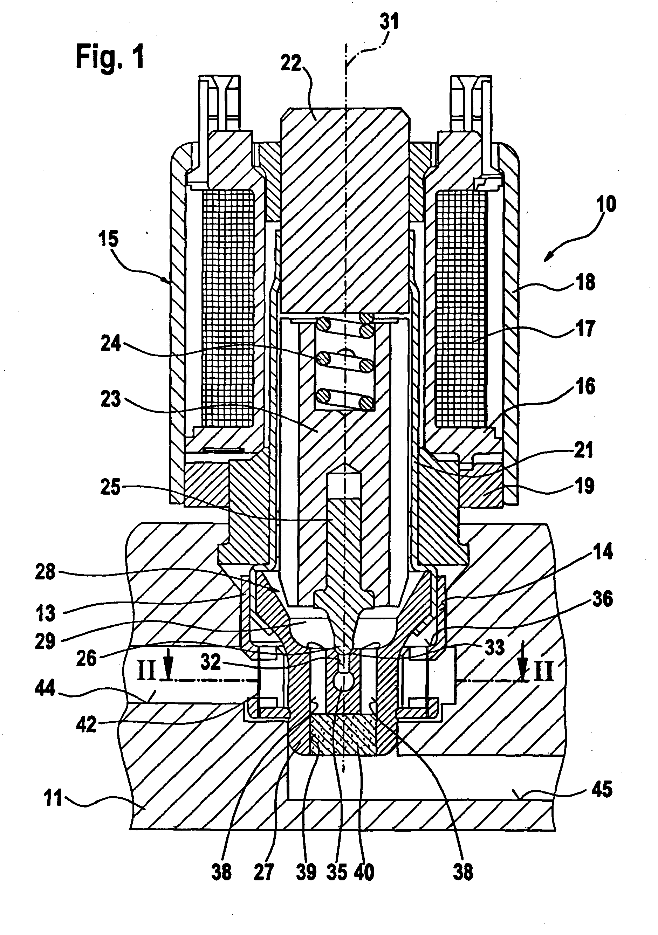

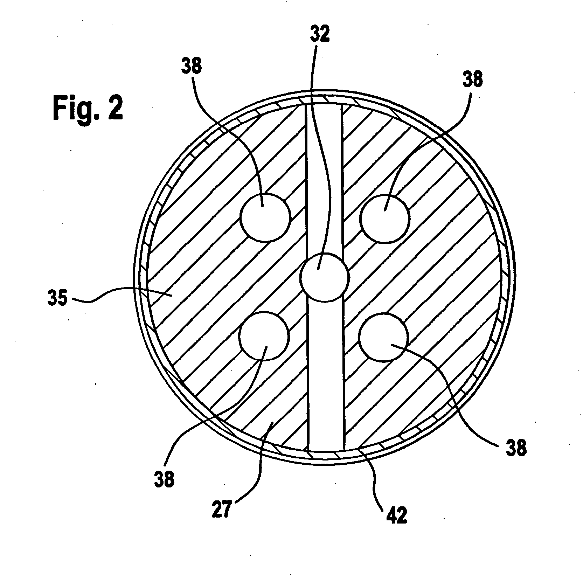

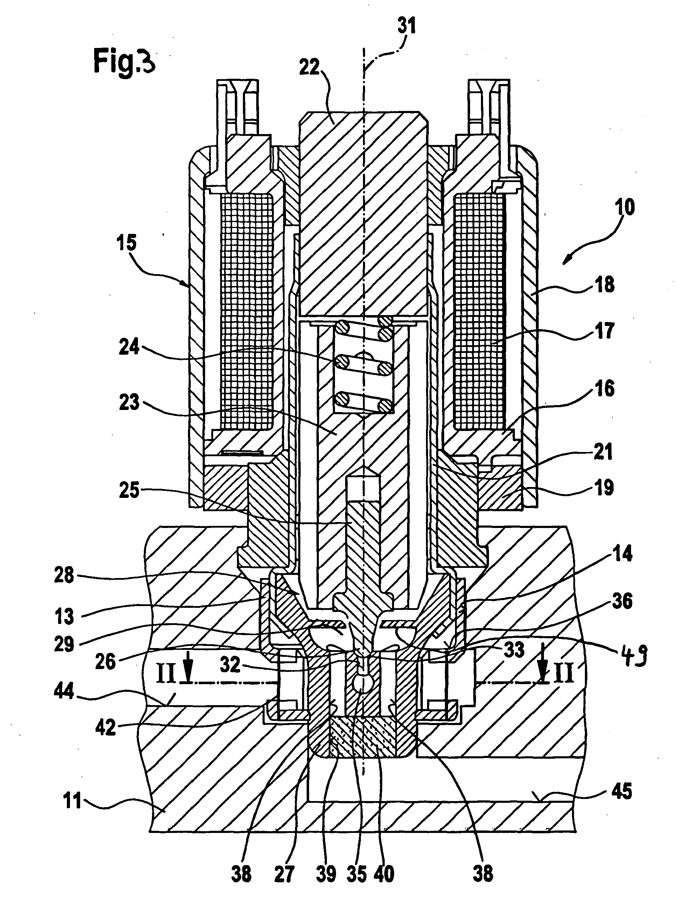

Ein Ausführungsbeispiel der Erfindung ist in der Zeichnung dargestellt und wird nachfolgend näher erläutert. Es zeigen: Figur 1 einen Längsschnitt durch ein elektromagnetisch betätigbares Ventil, das in einem Ventilblock angeordnet ist, Figur 2 einen Schnitt in der Ebene II-II der Figur 1 im Bereich der Zulaufbohrung, welche mit dem Ventilsitz zusammenwirkt, und Figur 3 einen Längsschnitt durch eine alternative Ausführung eines elektromagnetisch betätigbaren Ventils.

### Beschreibung der Ausführungsbeispiele

Das in der Figur 1 dargestellte elektromagnetisch betätigbare Ventil 10 ist teilweise in bzw. an einem Ventilblock 11 angeordnet, und bildet einen Teil einer im übrigen nicht dargestellten Drucksteuereinrichtung für eine Bremskraftanlage eines Kraftfahrzeuges.

Das stromlos geschlossene Ventil 10 besteht aus zwei Baugruppen: einem hydraulischen Teil 13, welcher teilweise in einer abgestuften Bohrung 14 des Ventilblocks 11 aufgenommen ist, und einem elektrischen Teil 15, welche auf den aus dem Ventilblock 11 aufragenden hydraulischen Teil 13 ausgesteckt ist. Der elektrische Teil 15 besteht im Wesentlichen aus einem Spulenkörper 16 mit einer elektrischen Wicklung 17, einem magnetflussleitenden Spulenmantel 18 und einer magnetflussleitenden Ringscheibe 19.

Der hydraulische Teil 13 des Ventils 10 weist eine Führungshülse 21 auf, welche an ihrem dem elektrischen Teil 15 zugeordneten Ende mit einem eingepressten und fluiddicht verschweißten Polkern 22 verschlossen ist. In der Führungshülse 21 ist ein längsverschiebbarer Anker 23 aufgenommen. Der Anker 23 ist mit einer Rückstellfeder 24 am Polkern 22 abgestützt. Polkernabgewandt ist in dem Anker 23 in einer Sacklochbohrung ein im Wesentlichen stiftförmiges Schließglied 25 mit einem halbkugelförmigen Ende 26 eingepresst.

Die Führungshülse 21 ist durch Umbörteln mit einem hülsenförmigen Ventilelement 27 verbunden. Das Ventilelement 27 weist auf der dem Anker 23 zugewandten Seite einen trichterförmig erweiterten Bereich 28 auf, in den der Anker 23 mit seinem Schließglied 25 hineinragt. Somit wird im Ventilelement 27 zwischen dem Ventilelement 27 und dem Anker 23 ein ringförmiger Raum 29 ausgebildet.

In der Längsachse 31 des Ventils 10, in der auch der Anker 23 und das Ventilelement 27 angeordnet sind, ist im Ventilelement 27 auf der dem Schließglied 25 zugewandten Seite eine sacklochartige Längsbohrung 32 ausgebildet. Die Längsbohrung 32 weist in ihrem Austrittsbereich eine Senkung 33 auf, welche zusammen mit dem Ende 26 des Schließgliedes 25 bei von der Rückstellfeder 24 in Richtung des Ventilelements 23 gedrücktem Schließglied 25 einen Dichtsitz ausbildet. Vom Grund der Längsbohrung 32 geht eine Querbohrung 35 aus, die bis an den Außenumfang des Ventilelements 27 führt.

Vom Grund 36 des Bereichs 28 des Ventilelements 27 gehen mehrere, im Ausführungsbeispiel vier, in gleichmäßigen Winkelabständen angeordnete Längsbohrungen 38 aus. Die Längsbohrungen 38 münden auf der der Senkung 33 gegenüberliegenden Seite des Ventilelements 27. Dort ist in einer Bohrung 39 ein Filterelement 40 eingesetzt. Das soweit beschriebene Ventilelement 27 ist vorzugsweise aus einem Spritz- oder Sintermetall hergestellt, wodurch sich die Möglichkeit ergibt, das Ventilelement 27 spanlos herzustellen.

Das Ventilelement 27 und der das Ventilelement 27 umschließende Bereich der Führungshülse 21 ist von einem ringförmigen Filterelement 42 umgegeben. Das Filterelement 42 ist radial von Druckmittel durchströmbar, wobei eine Verbindung zwischen dem Filterelement 42 und der Querbohrung 35 im Ventilelement 27 besteht.

Das soweit beschriebene Ventil 10 ist mit seinem Ventilelement 27 und seinem Filterelement 42 in die Stufenbohrung 14 des Ventilblocks 11 eingesetzt. In der Stufenbohrung 14 mündet in Höhe des Filterelements 42 bzw. der Querbohrung 35 eine Zulaufbohrung 44, welche beispeilsweise mit einem Radbremszylinder gekoppelt ist. Parallel, jedoch auf der gegenüberliegenden Seite der Zulaufbohrung 44, ist eine Ablaufbohrung 45 angeordnet, welche über das Filterelement 40 mit den Längsbohrungen 38 kommuniziert.

Im unbestromten Zustand des Ventils 10 drückt die Rückstellfeder 24 das Schließglied 25 gegen die Senkung 33 im Ventilelement 27, sodass über die Zulaufbohrung 44 und das Filterelement 42 in der Querbohrung 35 und der Längsbohrung 32 unter Druck anstehendes Druckmittel nicht über den Dichtsitz am Ende 26 des Schließgliedes 25 abströmen kann.

Eine Bestromung des Ventils 10 bewirkt, dass der Anker 23 in Richtung des Polkerns 22 bewegt wird, sodass das Schließglied 25 vom Ventilelement 27 abhebt. Dies bewirkt nunmehr ein Überströmen des Druckmittels über die Querbohrung 35 und die Längsbohrung 32 in den Raum 29, und von dort über die Längsbohrungen 38 im Ventilelement 27 und das Filterelement 40 in die Ablaufbohrung 45.

Dadurch, dass das Druckmittel in der Längsbohrung 32 eine hydraulische Kraft auf das Schließglied 25 ausübt, die entgegen der Federkraft der Rückstellfeder 24 wirkt, und somit die Bewegung des Ankers 23 bei einer Bestromung unterstützt, läßt sich mit relativ geringen magnetischen Kräften eine gezielte Bewegung des Schließgliedes 25 bewirken. Der Hub läßt sich somit über der Öffnungs- bzw. Schließzeit betrachtet vielfältig variieren, um je nach spezifischem Anwendungsfall die Strömungsverhältnisse am Ventil 10 so zu gestalten, dass sich ein möglichst geräuscharmer Öffnungs- und Schließvorgang des Ventils 10 erzielen lässt.

Das in der Figur 3 gezeigte alternative Ausführungsbeispiel entspricht im wesentlichen dem der Figur 1, wobei jedoch das Ventilelement 27 zusätzlich eine sich in radialer Richtung in den Raum 29 erstreckende Prallfläche 49 aufweist. Damit trifft der aus dem Dichtbereich austretende Fluidstrahl nicht mehr direkt auf den Anker 23, sondern auf die Prallfläche 49. Die Prallfläche 49 besitzt in der Mitte ein Loch, in welchem das Schließglied 25 beweglich sitzt. Fluktuationen in Druck und Geschwindigkeit des nach dem Ventilsitz austretenden Freistrahls führen unmittelbar zu Schwankungen in der hydraulischen Kraft (Fluktuationen wie sie hier betrachtet werden, können beispielsweise durch Druckstöße oder Kavitation hervorgerufen werden und sind daher unvermeidbar). Die ungewollte Schwankung in der Hydraulikkraft stört das für die Stabilität des Ventils 10 notwendige Gleichgewicht von Hydraulikkraft, Magnetkraft und Federkraft. Es kommt zu Schwingungen, die im ungünstigsten Fall zum Verlust der Regelbarkeit führen. Die Prallfläche 49 absorbiert gewissermaßen diese Störungen und erhöht dadurch die Robustheit im Sinne einer besseren Regelbarkeit des Ventils 10.

Kommt es in dem Ventil 10 zu Schwingungen des Ankers 23, so muss aus Gründen der Massenträgheit Fluid durch den Ringspalt zwischen Prallfläche 49 und Schließglied 25 strömen. Die Fläche des Ringspalts wird durch die Größe des Lochs in der Prallflächenmitte und den Durchmesser des Schließglieds 25 an der Durchtrittsstelle bestimmt. Ist diese Spaltfläche klein genug, wirkt der dadurch entstehende Strömungswiderstand dämpfend auf das System und damit dynamisch stabilisierend. Der Dämpfungsgrad kann durch die Größe des Spalts bestimmt werden.

Die Prallfläche 49 ist so ausgestaltet, dass sie die Strömungsumlenkung nach unten zu den Abströmkanälen 38 begünstigt. Dadurch erhöht sich bei gegebener Druckdifferenz der Durchfluss über das Ventil 10.

Da das Ventilelement 27 vorzugsweise aus einem Spritz- oder Sintermetall spanlos hergestellt werden kann, ist die Formgebung sehr variabel. Gestalterische Maßnahmen können insbesondere genutzt werden, um die Strömungsführung um Anker 23 und Schließglied 25 zu optimieren.

## Patentansprüche

1. Elektromagnetisch betätigbares Ventil (10), insbesondere für Bremskraftanlagen in Kraftfahrzeugen, das in einem Ventilblock (11) angeordnet ist, der eine Zulauf- (44) und eine Rücklaufbohrung (45) aufweist, mit einem in dem Ventilblock (11) angeordneten Ventilelement(27), das einen mit einem Ventilschließelement (25) zusammenwirkenden Ventilsitz aufweist, wobei das Ventilschließelement (25) mittels eines Ankers (23) bewegbar ist und von einer Druckfeder (24) gegen den Ventilsitz gedrückt wird, und wobei die Zulaufbohrung (44) mit dem Ventilelement (27) über wenigstens eine quer zur Längsachse (31) des Ventils (10) angeordnete Querbohrung (35) kommuniziert, **dadurch gekennzeichnet, dass** die Querbohrung (35) im Ventilelement (27) mit einer in dem Ventilsitz mündenden Längsbohrung (32) zusammenwirkt, welche auf der der Druckfeder (24) gegenüberliegenden Seite des Ventilschließelements (25) angeordnet ist, und dass das Ventilelement (27) wenigstens einen mit der Rücklaufbohrung (45) kommunizierenden Abströmkanal (38) aufweist, der bei vom Ventilsitz abgehobenem Ventilschließelement (25) über die Längsbohrung (32) mit der Querbohrung (35) verbunden ist.

2. Ventil nach Anspruch 1, **dadurch gekennzeichnet, dass** das Ventilelement (27) im Bereich des Ventilschließelementes (25) einen ringförmigen Überströmraum (29) aufweist, von dessen Grund (36) der wenigstens eine Abströmkanal (38) ausgeht.

3. Ventil nach Anspruch 2, **dadurch gekennzeichnet, dass** der wenigstens eine Abströmkanal (38) auf der der Rücklaufbohrung (45) zugewandten Seite in einem im Ventilelement (27) angeordneten Filterelement (40) mündet.

4. Ventil nach einem der Ansprüche 1 bis 3, **dadurch gekennzeichnet, dass** mehrere, in gleichmäßigen Winkelabständen zueinander angeordnete Abströmkanäle (38) im Ventilelement (27) angeordnet sind.

5. Ventil nach einem der Ansprüche 1 bis 4, **dadurch gekennzeichnet, dass** das Ventilelement (27) als spanlos hergestelltes Bauteil ausgebildet ist.

6. Ventil nach einem der vorhergehenden Ansprüche, **dadurch gekennzeichnet, dass** Mittel (49) zur Beeinflussung der Strömungsführung um den Anker (23) und das Ventilschließelement (25) vorgesehen sind.

7. Ventil nach Anspruch 6, **dadurch gekennzeichnet, dass** die Mittel zur Beeinflussung der Strömungsführung als Prallfläche (49) ausgebildet sind.

8. Ventil nach einem der vorhergehenden Ansprüche 6 oder 7, **dadurch gekennzeichnet, dass** die Mittel (49) zur Beeinflussung der Strömungsführung als Teil des Ventilelements (27) ausgebildet sind.

9. Ventil nach Anspruch 8, **dadurch gekennzeichnet, dass** die Mittel (49) zur Beeinflussung der Strömungsführung ringförmig das Ventilschließelement (25) umgeben.

10. Ventil nach einem der vorhergehenden Anspruch 6 bis 9, **dadurch gekennzeichnet, dass** die Mittel (49) zur Beeinflussung der Strömungsführung im Strömungsbereich zwischen Anker (23) und zumindest einem Abströmkanal (38) angeordnet sind.

## Claims

1. Electromagnetically actuable valve (10), in particular for brake power systems in motor vehicles, which is arranged in a valve block (11) which has an inflow bore (44) and a return bore (45), with a valve element (27) which is arranged in the valve block (11) and which has a valve seat cooperating with a valve-closing element (25), the valve-closing element (25) being moveable by means of an armature (23) and being pressed against the valve seat by a compression spring (24), and the inflow bore (44) communicating with the valve element (27) via at least one transverse bore (35) arranged transversely to the longitudinal axis (31) of the valve (10), **characterized in that** the transverse bore (35) in the valve element (27) cooperates with a longitudinal bore (32) which issues into the valve seat and which is arranged on that side of the valve-closing element (25) which lies opposite the compression spring (24), and **in that** the valve element (27) has at least one outflow duct (38) which communicates with the return bore (45) and which, with the valve-closing element (25) lifted off from the valve seat, is connected to the transverse bore (35) via the longitudinal bore (32).

2. Valve according to Claim 1, **characterized in that** the valve element (27) has in the region of the valve-closing element (25) an annular overflow space (29), from the bottom (36) of which emanates the at least one outflow duct (38).

3. Valve according to Claim 2, **characterized in that** the at least one outflow duct (38) issues, on the side facing the return bore (45), in a filter element (40) arranged in the valve element (27).

4. Valve according to one of Claims 1 to 3, **characterized in that** a plurality of outflow ducts (38) arranged at uniform angular intervals with respect to one another are arranged in the valve element (27).

5. Valve according to one of Claims 1 to 4, **characterized in that** the valve element (27) is designed as a component produced in a non-cutting way.

6. Valve according to one of the preceding claims, **characterized in that** means (49) for influencing the flow routing around the armature (23) and the valve-closing element (25) are provided.

7. Valve according to Claim 6, **characterized in that** the means for influencing the flow routing are designed as a baffle surface (49).

8. Valve according to one of the preceding Claims 6 or 7, **characterized in that** the means (49) for influencing the flow routing are designed as part of the valve element (27).

9. Valve according to Claim 8, **characterized in that** the means (49) for influencing the flow routing surround the valve-closing element (25) annularly.

10. Valve according to one of the preceding Claims 6 to 9, **characterized in that** the means (49) for influencing the flow routing are arranged in the flow region between the armature (23) and at least one outflow duct (38).

## Revendications

1. Soupape électromagnétique (10) notamment pour une installation de frein de véhicule automobile logée dans un bloc de soupape (11) ayant un perçage d'alimentation (44) et un perçage de retour (45),
un élément de soupape (27) logé dans le bloc (11) ayant un siège de soupape coopérant avec un élément d'obturation de soupape (25),
l'élément d'obturation de soupape (25) étant déplacé par un induit (23) et poussé par un ressort de compression (24) contre le siège de soupape, et
le perçage d'alimentation (44) communique avec l'élément de soupape (27) par au moins un perçage transversal (35) disposé transversalement à l'axe longitudinal (31) de la soupape (10),
**caractérisée en ce que**
le perçage transversal (35) coopère dans l'élément de soupape (27) avec un perçage longitudinal (32) débouchant dans le siège de soupape et qui est installé sur le côté de l'élément d'obturation de soupape (25) à l'opposé du ressort de compression (24) et
l'élément de soupape (27) comporte au moins un canal de sortie (38) communiquant avec le perçage de retour (45), ce canal étant relié par le perçage longitudinal (32) au perçage transversal (35) lorsque l'élément d'obturation de soupape (25) est soulevé du siège de soupape.

2. Soupape selon la revendication 1,
**caractérisée en ce que**
l'élément de soupape (27) présente une chambre de débordement (29) annulaire dans la région de l'élément d'obturation de soupape (25) et au moins un canal de sortie (38) est issu du fond (36) de cette chambre.

3. Soupape selon la revendication 2,
**caractérisée en ce qu'**
au moins un canal de sortie (38) débouche sur le côté tourné vers le perçage de retour (45) dans un élément de filtre (40) prévu dans l'élément de soupape (27).

4. Soupape selon l'une des revendications 1 à 3,
**caractérisée en ce que**
plusieurs canaux de sortie (38) sont prévus dans des positions équiangulaires dans l'élément de soupape (27).

5. Soupape selon l'une des revendications 1 à 4,
**caractérisée en ce que**
l'élément de soupape (27) est un composant fabriqué par usinage sans enlèvement de copeaux.

6. Soupape selon l'une des revendications précédentes,
**caractérisée par**
des moyens (49) pour influencer le guidage de l'écoulement autour de l'induit (23) et de l'élément d'obturation de soupape (25).

7. Soupape selon la revendication 6,
**caractérisée en ce que**
les moyens pour influencer le guidage de l'écoulement sont des surfaces brise-jet (49).

8. Soupape selon l'une des revendications précédentes 6 ou 7,
**caractérisée en ce que**
les moyens (49) pour influencer le guidage de l'écoulement sont réalisés comme partie de l'élément de soupape (27).

9. Soupape selon la revendication 8,
**caractérisée en ce que**
les moyens (49) pour influencer le guidage de l'écoulement entourent l'élément d'obturation de soupape (25) suivant une forme annulaire.

10. Soupape selon l'une des revendications précédentes 6 à 9,
**caractérisée en ce que**
les moyens (49) pour influencer le guidage de l'écoulement sont prévus dans la région d'écoulement entre l'induit (23) et au moins un canal d'écoulement de sortie (38).
